Europäisches Patentamt

European Patent Office

Office européen des brevets

(19)

(11) Veröffentlichungsnummer: **0 315 270**

**A2**

(12) ## EUROPÄISCHE PATENTANMELDUNG

(21) Anmeldenummer: 88202437.5

(51) Int. Cl.⁴: **G02F 1/33 , G02B 6/32**

(22) Anmeldetag: 01.11.88

(30) Priorität: 06.11.87 DE 3737634

(43) Veröffentlichungstag der Anmeldung:
**10.05.89 Patentblatt 89/19**

(84) Benannte Vertragsstaaten:
**DE FR GB IT SE**

(71) Anmelder: **Philips Patentverwaltung GmbH
Wendenstrasse 35 Postfach 10 51 49
D-2000 Hamburg 1(DE)**

(84) **DE**

(71) Anmelder: **N.V. Philips' Gloeilampenfabrieken
Groenewoudseweg 1
NL-5621 BA Eindhoven(NL)**

(84) **FR GB IT SE**

(72) Erfinder: **Brinkmeyer, Ernst, Prof.Dr.
Mittelstrasse 33
D-2110 Buchholz(DE)**
Erfinder: **Brennecke, Wolfgang
Roonstrasse 22
D-2000 Hamburg 20(DE)**
Erfinder: **Fuchs, Manfred, Dr.
Grosse Bahnstrasse 4
D-2000 Hamburg 54(DE)**
Erfinder: **Dargatz, Michael
Goldbekufer 33
D-2000 Hamburg 60(DE)**

(74) Vertreter: **Koch, Ingo, Dr.-Ing. et al
Philips Patentverwaltung GmbH
Wendenstrasse 35 Postfach 10 51 49
D-2000 Hamburg 1(DE)**

(54) **Optisches Mehrtorelement mit einem akustooptischen Modulator.**

(57) Die Erfindung bezieht sich auf ein optisches Mehrtorelement mit einem akustooptischen Modulator (AOM), welcher an einer Seite mindestens zwei Lichtwellenleiter-Anschlüsse, insbesondere Monomode-LWL aufweist, deren Stirnflächen in der Brennebene einer sich zwischen den LWL und dem akustooptischen Modulator befindlichen Linse angeordnet sind. Um bei geringer Baulänge eine einfach justierbare und dämpfungsarme Ausführung zu erhalten, ist vorgesehen, daß an mindestens einer Seite des AOM (1) eine einzige Linse (2,3,31) mit ihrer optischen Achse zur Durchgangsachse des AOM (1) ausgerichtet ist, und daß die LWL (4 bis 6, 18 bis 20 bzw. 27,28) achsparallel zueinander und außerhalb der optischen Achse der Linse (2,3,31) in der Weise angeordnet sind, daß von der Linse (2,3,31) zum AOM (1) führende parallel gebündelte Strahlen (14 bis 17) im Braggwinkel zur optischen Achse auf den aktiven Bereich des AOM (1) gelenkt sind.

Fig.1

## Optisches Mehrtorelement mit einem akustooptischen Modulator

Die Erfindung bezieht sich auf ein optisches Mehrtorelement mit einem akustooptischen Modulator (AOM), welcher an einer Seite mindestens zwei Lichtwellenleiter-Anschlüsse, insbesondere Monomode-LWL aufweist, deren Stirnflächen in der Brennebene einer sich zwischen den LWL und dem akustooptischen Modulator befindlichen Linse angeordnet sind.

Eine solche Anordnung ist durch "Journal of Lightwave Technology", Vol. LT-2, No. 2, Seiten 108 bis 115, bekannt. Dabei ist jedem einzelnen, einen Toranschluß bildenden LWL eine Gradientenlinse koaxial zugeordnet. Durch die Linsen wird eine Transformation der Feldweiten der Gaußschen Strahlen bewirkt. Infolgedessen ist die Feldweite der Strahlen auf dem Weg durch den AOM gegenüber der Feldweite in den LWL vergrößert.

Bei nicht akustisch erregtem AOM werden die Strahlen auf ungebeugtem direkten Weg weitergeleitet. Bei akustischer Erregung werden unter dem Braggwinkel zur akustischen Wellenfront auftreffende Strahlen um den doppelten Braggwinkel abgelenkt. Aufgrund dieser Wirkung kann mit einem AOM wie im bekannten Fall ein optischer Schalter realisiert werden. Da die Frequenz des abgelenkten Strahls zusätzlich auch um die akustische Frequenz vergrößert oder verkleinert wird, ist ein AOM-Mehrtorelement auch zur Bildung eines Lokaloszillatorstrahls (LO) für optischen Heterodynempfang geeignet. Die kombinierte Nutzung eines AOM als Schalter und zur Bildung eines LO-Strahls ist durch die DE-OS 35 06 884 in Anwendung für ein Heterodyn-OTDR bekannt.

Ein OTDR (Optical time domain reflectometer) ist ein Gerät, mit welchem das Dämpfungsverhalten eines LWL von einer Seite her gemessen werden kann, indem die von den Längenorten des LWL rückgestreuten Anteile eines optischen Sendesignals (Laserimpuls) ausgewertet werden. Um eine große Reichweite eines OTDR zu erreichen, sollten seine optischen Bauelemente dämpfungsarm sein, damit die mit zunehmender Entfernung vom OTDR abnehmende Intensität der Rückstreusignale noch genügend groß ist, um einen ausreichenden Rauschabstand zu sichern.

Ein Mehrtorelement der eingangs genannten Art besteht aus zahlreichen Einzelelementen, welche zwangsläufig zusätzliche Dämpfungen zur Folge haben. Außer den unvermeidlichen materialabhängigen Durchgangsdämpfungen ergeben sich Einfügungsdämpfungen, die von der Güte und geometrischen Genauigkeit der Einkopplung der optischen Strahlen abhängen. Wesentlich für ein dämpfungsarmes Mehrtorelement der eingangs genannten Art ist deshalb eine sorgfältige relative Justierung der einzelnen Bauelemente. Weiterhin sollten lange Freistrahlwege durch Luft vermieden werden, da einerseits natürlich eine kleine Baugröße des Mehrtorelements anzustreben ist, und da andererseits auf den Freistrahlwegen unvermeidlich Abstrahlverluste, insbesondere durch Strahlaufweitung, entstehen.

Ohne besondere Maßnahmen lassen sich ein direkter Strahl und der bei akustischer Erregung abgelenkte Strahl nur in relativ großem Abstand vom AOM separat durch die nicht beliebig klein zu bauenden Linsen erfassen, weil der Braggwinkel sehr klein ist. Zur Vermeidung eines zu hohen Abstandes ist im eingangs genannten bekannten Fall ein Umlenkprisma vorgesehen, welches jedoch zusätzliche Dämpfungsverluste verursacht und hohen Justieraufwand erfordert.

Der Erfindung liegt deshalb die Aufgabe zugrunde, eine Anordnung der eingangs genannten Art derart zu gestalten, daß sie bei geringer Baulänge einfach justierbar ist und geringe Dämpfungen der hindurchgeleiteten optischen Strahlen verursacht.

Die Lösung gelingt dadurch, daß an mindestens einer Seite des AOM eine einzige Linse mit ihrer optischen Achse zur Durchgangsachse des AOM ausgerichtet ist, und daß die LWL achsparallel zueinander und außerhalb der optischen Achse der Linse in der Weise angeordnet sind, daß von der Linse zum AOM führende parallel gebündelte Strahlen im Braggwinkel zur optischen Achse auf den aktiven Bereich des AOM gelenkt sind.

Während im bekannten Fall für jeden der an einer Seite des AOM angeordneten LWL eine eigene Linse vorgesehen ist, genügt nunmehr beidseitig des AOM jeweils eine einzige Linse. Erfindungsgemäß sind die LWL, die Linse und der AOM relativ zueinander derart angeordnet, daß die Linsen nicht nur zur Aufweitung und parallelen Bündelung der Strahlen dienen, sondern auch zusätzlich als Ablenkelement wirken, welches den Strahl um den Braggwinkel gegenüber den Richtungen der Mittelachsen der aus den LWL austretenden Strahlen ablenkt.

Beim erfindungsgemäß gestalteten Mehrtorelement sind deshalb die optischen Achsen der Linse und die Durchgangsachse des AOM identisch, ein Differenzwinkel braucht nicht einjustiert zu werden. Die LWL sind parallel zueinander angeordnet. Eine Parallellage mit vorgegebenem Abstand ist bedeutend einfacher zu verwirklichen als eine genaue Winkelanordnung der LWL. Die eng benachbarte Parallellage ergibt sich, ohne daß ein Umlenkprisma wie im bekannten Fall erforderlich ist.

Der Abstand der zueinander parallelen LWL kann sehr gering, nämlich kleiner als das dreifache ihres Außendurchmessers sein, so daß dann die Linsen und die Stirnflächen der LWL sehr nahe zum AOM angeordnet sind.

Vorzugsweise ist vorgesehen, daß die LWL mit ihrer freigelegten Mantelschicht nahezu unmittelbar aneinanderliegen.

Wenn der Abstand der Mittelachsen der nebeneinanderliegenden LWL zumindest mit guter Näherung den Wert $d = f \cdot 2\alpha$ hat (f = Brennweite der Linse), verlaufen die Strahlachsen zwischen Linse und dem LWL parallel zur optischen Achse der Linse und zwischen Linse und AOM um den Braggwinkel geneigt zur Richtung der durch den AOM geleiteten akustischen Wellenfront.

Dadurch, daß die Brennweite f der Linse den Wert $^w$max$\cdot \pi \cdot {}^w$o$/\lambda$ nicht wesentlich überschreitet, wird gewährleistet, daß die Strahlweiten der den AOM durchsetzenden parallelen Strahlen die aktive Öffnung des AOM nicht überschreiten.

Grundsätzlich wäre es denkbar, als Linse eine Selfoc-Linse zu verwenden. Allerdings sind derzeit keine Selfoc-Linsen mit den für die Erfindung benötigten Brennweiten verfügbar. Mit Plankonvex- oder Bikonvexlinsen konnte die erfindungsgemäße Lösung jedoch hervorragend realisiert werden.

Bevorzugt wird eine freistrahloptische Anordnung, welche dadurch gekennzeichnet ist, daß die Linse und die LWL derart relativ zueinander an einem Tragkörper befestigt sind, daß bei der Herstellung des Mehrtorelements eine gegenseitige Justage der Abstände in drei zueinander senkrechten Koordinatenrichtungen x, y und z möglich ist.

Dabei ist zur Erzielung möglichst geringer Dämpfungen die Möglichkeit zur genauen Justierung gegeben, welche bei einer Ausführung ohne Luftwege (z.B. integrierte Optik) nicht möglich wäre.

Der Justieraufwand wird dadurch verringert, daß die Abstände in den Koordinatenrichtungen x, y und z unabhängig voneinander selektiv justierbar und fixierbar sowie Mittel vorgesehen sind, welche bei der Justierung in einer Koordinatenrichtung die Beibehaltung der Justierlage in den anderen Koordinatenrichtungen gewährleisten. Eine Einjustierung in einer Koordinatenrichtung kann dann beim Justiervorgang für die anderen Koordinatenrichtungen nicht verstellt werden.

Eine vorteilhaft konstruktive Lösung besteht darin, daß die Linse und die LWL in voneinander verschiedenen Koordinatenrichtungen justierbar sind. Dabei werden die LWL an einer Seite des AOM in einem gemeinsamen Halteblock in der Weise festgelegt, daß sie in der Ebene der akustischen Erregung des AOM angeordnet sind.

In einem solchen Halteblock sind die LWL bereits im richtigen Parallelabstand fixiert. Ihre weitere Justierung kann dann gemeinsam mit dem Halteblock erfolgen.

Gemäß einer bevorzugten Lösung ist vorgesehen, daß der Halteblock der LWL gegenüber der Grundplatte ausschließlich in der x-Richtung (Richtung der akustischen Welle) justierbar ist, während die Linse in den Koordinatenrichtungen y und z justierbar ist, und daß die Linse in einem Aufnahmeblock angeordnet ist, dessen Basisteil entlang im Winkel zueinander befindlicher und in z-Richtung (Richtung der optischen Achse) verlaufender Längsanlageflächen verschiebbar ist, und daß die Linse in einem gegenüber dem Basisteil in y-Richtung verschiebbaren Fassungsteil befestigt ist.

Ein derartiger konstruktiver Aufbau ermöglicht bereits eine sehr genaue relative Ausgang-Positionierung der einzelnen Bauteile, so daß nachfolgend lediglich noch eine möglichst exakte Feinjustierung erforderlich ist.

Insbesondere für eine Ausführung als Viertorelement mit vier Monomode-LWL-Toranschlüssen, von denen je zwei an jeder Seite des AOM in einer allen gemeinsamen Ebene angeordnet sind, ist ein beidseitig symmetrischer Aufbau mit gleichartigen Linsen vorteilhaft, welche möglichst genau gleiche Brennweite haben sollten.

Wie auch im bekannten Fall kann derjenige LWL, welcher zu einem optischen Empfänger führt, auch als Multimode-LWL ausgebildet sein, mit welchem der aufzunehmende Strahl ohne erheblichen Justieraufwand dämpfungsarm treffbar ist.

Geringe Toleranzabweichungen der Winkellage und der Koaxialität sind dabei zulässig, so daß eine Einzeljustierung ohne außergewöhnlichen Aufwand möglich ist.

Für die erfindungsgemäße Lösung ist eine möglichst genaue Lage der LWL in der x-z-Ebene anzustreben. Bei ihrer Halterung in einem gemeinsamen Halteblock, welcher eine zur x-z-Ebene parallele Bezugsebene aufweist, müssen die LWL-Achsen eine möglichst genau gleiche Höhenlage zu dieser Bezugsebene aufweisen. Sie liegen jedoch mit ihrer Außenmantelfläche am Halteblock an. Leider ist nicht gewährleistet, daß die Außenmantelfläche genau konzentrisch zum Kern des LWL verläuft. Die nachteilige Auswirkung eines solchen toleranzbedingten Mittenversatzes auf die Lage der benachbarten LWL wird dadurch vermieden, daß die an einer Seite des AOM befindlichen LWL aus einem einzigen LWL-Längenabschnitt durch Teilung und Nebeneinanderlegen der Teilstücke in gleicher Querschnitts-Winkellage hergestellt sind.

Ebenso ist bei einem beidseitig symmetrisch aufgebauten Viertorelement vorteilhaft vorgesehen, daß die an beiden Seiten des AOM befindlichen LWL aus einem einzigen LWL-Abschnitt hergestellt sind, indem durch eine erste Teilung und darauffolgende zweite Teilung der in gleicher Winkellage nebeneinander gelegten ersten Teilstücke zwei Paare gebildet und in identischer Querschnitts-Winkellage in jeweils einem Halteblock fixiert sind.

Eine bevorzugte Lösung mit einfacher Justiermöglichkeit ist dadurch gekennzeichnet, daß ein Halteblock für die an einer Seite des AOM befindlichen LWL und ein Aufnahmeblock für die Linse an einer gemeinsamen, zur x-z-Ebene parallelen Ebene verschiebbar anliegen. Bei einem beidseitig symmetrischen Viertorelement ist entsprechend vorgesehen, daß Halteblöcke für die LWL und die Aufnahmeblöcke für die Linsen beidseitig des AOM an einer gemeinsamen zur y-z-Ebene parallelen Ebene verschiebbar anliegen.

Auch wenn nur ein Dreitorelement benötigt werden, ist ein Aufbau als symmetrisches Viertorelement wegen der einfachen Justiermöglichkeit vorteilhaft, wobei dann ein LWL unbenutzt bleibt.

Insbesondere bei Verwendung eines erfindungsgemäßen Mehrtorelements für einen Heterodyn-OTDR ist die Eingliederung eines optischen Isolators zweckmäßig, welcher störende Rückkopplungen von Streulicht in den Laser verhindert. Ein solcher Isolator ist vorzugsweise zwischen der Linse und dem AOM im Eingangsweg des vom Laser gesendeten Strahls anzuordnen.

Die Sollausrichtung der LWL in dem Halteblock wird dadurch genau erreicht, daß der Halteblock für die LWL aus einem Unterteil mit V-förmigen Aufnahmenuten für die LWL und einem aufgeklebten Oberteil besteht, welches an den LWL unmittelbar anliegt und zum Unterteil einen Klebespalt von insbesondere 2 bis 4 μm aufweist.

Ein Verkippen von Oberteil und Unterteil wird dadurch verhindert, daß beidseitig der die Anschlußtore bildenden LWL mit Abstand gleichartige LWL in gleichartigen V-Nuten des Unterteils zur Sicherung einer stabilen Parallel-Anlage des Oberteils vorgesehen sind.

Eine feste Anlage der LWL am Oberteil und Unterteil wird dadurch begünstigt, daß im Bereich zwischen den mittleren und den äußeren V-Nuten in den Spaltflächen des Oberteils und/oder des Unterteils Ausnehmungen eingearbeitet sind.

Überschüssiger Kleber, der ein Hochdrücken des Oberteils verursachen könnte wird in die gebildeten Ausweichhohlräume gedrängt.

Insbesondere für Heterodyn-OTDR, deren Sendelaser besonders schmalbandig und stabil sein muß, kann es trotz Einschaltung eines optischen Isolators zusätzlich vorteilhaft sein, weitere Maßnahmen zur Verhinderung von Reflexionen vorzusehen, da bekanntlich ein Isolator nicht vollständig die Rückstrahlung von Reflexen abblockt. Deshalb wird gemäß einer bevorzugten Lösung vorgesehen, daß die Stirnflächen der LWL in einem Winkel zur Achse dieser LWL angeschliffen sind, welcher geringfügig, insbesondere um etwa $\beta = 6°$, von einem rechten Winkel abweicht, und daß die Achsen der LWL in einem solchen Winkel, insbesondere $\gamma = 2,7°$, zur Achse der Linse angeordnet sind, daß die Achsen der aus den Stirnflächen der LWL austretenden Strahlen parallel zur optischen Achse der Linse verlaufen.

Eine einfache Herstellungsmöglichkeit ist dadurch gegeben, daß die schräg angeschliffenen Stirnflächen der in einem Halteblock festgelegten LWL in einer gemeinsamen Ebene verlaufen, weil dann nur ein einziger Poliervorgang für die Bearbeitung beider Stirnflächen der bereits im Halteblock festgelegten LWL erforderlich ist. Es hat sich erwiesen, daß die Tatsache, daß die Stirnflächen der beiden LWL nicht mehr beide gleichzeitig in der Brennebene der Linse angeordnet sein können, wegen der im Vergleich zur Brennweite der Linsen sehr kleinen Versatzstrecke der eng benachbarten LWL-Stirnflächen keine merkbar nachteiligen Auswirkungen hat.

Die Erfindung wird anhand der Beschreibung von in der Zeichnung schematisch dargestellten vorteilhaften Ausführungsbeispielen näher erläutert.

Fig. 1 zeigt die Systemanordnung eines erfindungsgemäßen Viertorelements.

Fig. 2 zeigt die Systemanordnung eines erfindungsgemäßen Dreitorelements, bei welchem die Stirnflächen der LWL schräg angeschliffen sind.

Fig. 3 zeigt in perspektivischer Darstellung die konstruktive Anordnung der wesentlichen zu justierenden Bauelemente eines erfindungsgemäßen Mehrtorelements.

Fig. 4 zeigt die Anordnung der LWL in ihrem Halteblock.

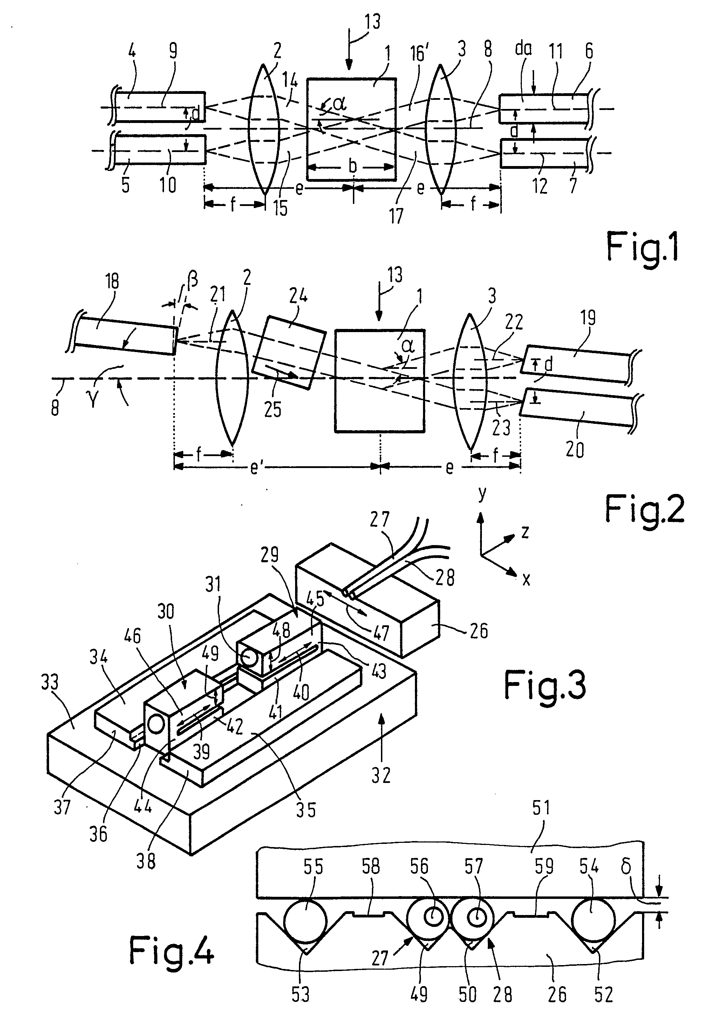

Das in Fig. 1 schematisch dargestellte System eines Viertorelements besteht aus einem AOM 1, gleichartigen Linsen 2 und 3 mit der Brennweite f sowie die Toranschlüsse bildenden LWL 4,5,6 und 7. Die optischen Achsen der Linsen 2 und 3 und die Durchgangsachse des AOM 1 fallen mit der Mittellinie 8 zusammen. Die Längsachsen 9,10, 11 und 12 der LWL 4,5,6 und 7 sind parallel zueinander in einer gemeinsamen Ebene angeordnet, welche in Richtung 13 einer auf den AOM 1 leitbaren akustischen Welle durch die Mittellinie 8 verläuft. Durch die Mittellinie 8 ist die z-Richtung und durch die Richtung der akustischen Welle die y-Richtung eines x-y-z-Koordinatensystems definiert (vgl. auch Fig. 3).

Der Abstand 1 von der Mitte des AOM zu den Stirnflächen der LWL 4 bis 7 sollte nach Möglichkeit den Wert $1 = 2 f + (n - 1) b/2 n$ betragen (n = Brechungsindex des AOM-Materials, b = Breite des AOM), jedoch ist eine sehr präzise Einjustierung dieses Wertes insbesondere dann nicht erforderlich, wenn der Durchmesser der aktiven Öffnung des AOM 1 größer als die Feldweite der zwischen den Linsen 2 und 3 verlaufenden parallelen aufgeweiteten Strahlen 14,15,16 und 17 ist, welche sich in der Mitte des AOM 1 schneiden und jeweils im übertrieben groß gezeichneten Braggwinkel $\alpha$ zur Mittellinie 8 gerichtet sind. Eine solche Richtung der Strahlbereiche 14 bis 17 ergibt sich dann, wenn die Bedingung $d = f \cdot 2\alpha$ zumindest annähernd erfüllt ist.

Ohne akustische Erregung des AOM werden ein vom LWL 4 ausgehender Strahl in den LWL 7 und ein vom LWL 5 ausgehender Strahl in den LWL 6 - bzw. jeweils umgekehrt -geleitet. Bei Erregung des AOM 1 mit einer akustischen Welle in Richtung 13 werden ein vom LWL 4 ausgehender Strahl in den LWL 6 und ein vom LWL 5 ausgehender Strahl in den LWL 7 - bzw. jeweils umgekehrt - geleitet.

Demzufolge ergibt sich eine Vielzahl von Schaltwegen für das über einen der LWL 4 bis 7 zugeführte bzw. abgenommene Licht.

Bei akustischer Erregung des AOM wird gleichzeitig die Frequenz des Lichts um die akustische Frequenz verändert. Dieser Effekt kann in bekannter Weise zur Bildung eines Lokaloszillatorstrahls (LO) für ein Heterodyn-OTDR ausgenutzt werden.

Bei einer ausgeführten Anordnung ergaben sich folgende Daten:

$$\text{Wellenläge des Lichts:} \quad \lambda = 1300 \text{ nm}$$
$$\text{Brennweite} \qquad\qquad\quad f = 4 \text{ mm}$$
$$\text{akustische Frequenz} \qquad fa = 80 \text{ MHz}$$
$$\text{Werkstoff des AOM-Kristalls:} \quad P_6 M_o O_4$$
$$\text{Braggwinkel} \qquad\qquad\quad \alpha = 0.82°$$

$$\text{Außendurchmesser der}$$
$$\text{Monomode-LWL} \qquad\qquad da = 125 \text{ µm}$$
$$\text{Abstand der LWL-Achsen} \quad d = 127 \text{ µm}$$
$$\text{Breite des AOM} \qquad\qquad b = 19 \text{ mm}$$

Bei der Ausführung als Dreitorelement nach Fig. 2 sind die Toranschlüsse bildenden Monomode-LWL 18,19 und 20 jeweils um den Winkel $\gamma$ zur Mittellinie 8 geneigt. Dadurch wird erreicht, daß bei einem Schräganschliff der Stirnflächen der LWL 18 bis 20 um den Winkel $\beta$ trotzdem die Achsen 21,22 und 23 der Aufweitungsbereiche der Strahlen zwischen den Linsen 1 und 2 und den LWL 18 bis 20 parallel zur Mittellinie 8 verlaufen. Dann gelangen die von den Linsen zum AOM ausgehenden aufgeweiteten Parallelstrahlen wiederum unter dem Braggwinkel auf den AOM 1 und schneiden sich in dessen Mitte.

Auch bei der Anordnung nach Fig. 2 liegen die Achsen der LWL 18 bis 20 entsprechend Fig. 1 in einer gemeinsamen Ebene. Da der optische Isolator 24 zwischen Linse 2 und AOM 1 eingefügt ist, ist der Abstand zwischen der Stirnfläche des LWL 18 und der Mitte des AOM größer als der Wert 1. Die Stirnflächen der LWL 19 und 20 sind in gleichem Abstand zur Mittellinie 8 angeordnet. Für die Stirnfläche des LWL 18 ergibt sich dagegen wegen des verlängerten Weges 1' ein vergrößerter Abstand von der Mittellinie 8. Dieser ist allerdings in Fig. 2 stark übertrieben gezeichnet. Der Braggwinkel ist in Wirklichkeit sehr viel kleiner. Ein Unterschied der relativen Lage der LWL 18 und 20 läßt sich mit bloßem Auge kaum erkennen, so daß für die Anordnungen nach den Fig. 1 und 2 gleiche Justierordnungen verwendet werden können, wie sie in den Fig. 3 und 4 dargestellt sind.

Es hat sich herausgestellt, daß folgende Werte für die Winkel $\beta$ und $\gamma$ besonders günstig sind:

$\beta = 6°$

$\gamma = 2,7°$

Wenn man von diesen Werten um nicht mehr als etwa 30 % abweicht, werden Fresnel-Reflexionen weitgehend vermieden, ohne daß nennenswerte zusätzliche Einfügungsdämpfungen entstehen.

Die LWL 19 und 20 waren bei einer ausgeführten Anordnung in einem gemeinsamen Halteblock befestigt, wie er in den Fig. 3 und 4 dargestellt ist. Dabei wurden die Stirnflächen der LWL 19 und 20 in einem Arbeitsgang geschliffen und poliert, so daß diese Flächen in einer gemeinsamen Ebene lagen. Da der Winkel γ sehr klein ist, führte die Tatsache, daß dann nicht beide Stirnflächen gleichzeitig genau in der Brennebene der Linse angeordnet sind, nicht zu nennenswerten Zusatzdämpfungen.

Der LWL 18 wurde mit einem nicht genutzten parallelen LWL in einem gleichen Halteblock wie die LWL 19 und 20 angeordnet, so daß sich wie in Fig. 1 ein symmetrischer, konstruktiv einfacher und leicht zu justierender Aufbau ergab.

Die Ausführung nach Fig. 2 wurde für ein Heterodyn-OTDR eingesetzt. Dabei wird das Laser-Sendelicht durch den LWL 18 zugeführt. Der Isolator 24 wurde derart ausgerichtet, daß die Polarisationsebene des Laserlichts nahezu unbehindert in Richtung des Pfeils 25 hindurchgelassen wird. Wegen der nichtreziproken Drehung der Polarisationsebene des Lichts beim Durchgang durch den Isolator 24 kann in Gegenrichtung praktisch kein reflektiertes Licht zurück zum Laser gelangen. Über den LWL 19 wurde bei akustischer Erregung des AOM 1 ein LO-Strahl abgenommen. Bei nicht erregtem AOM 1 in den LWL 20 gelangendes Licht wurde in einen zu messenden Monomode-LWL geleitet. Da das Licht auf den Wegen durch das Dreitorelement nach Fig. 2 nur geringe Dämpfungen erfährt, war die Reichweite des mit dieser Anordnung ausgerüsteten Heterodyn-OTDR sehr groß, d.h. auch das Dämpfungsverhalten sehr weit entfernt liegender Längenabschnitte des zu messenden LWL konnte zuverlässig gemessen werden.

Zu diesem Erfolg trug wesentlich die genaue Justierung der einzelnen Bauelemente relativ zueinander bei. Dabei zeigte sich, daß eine Feinjustierung mit anzustrebenden Genauigkeiten von Bruchteilen eines μm mit einfachen konstruktiven Mitteln und mit relativ geringem Justieraufwand möglich ist, wenn ein konstruktiver Aufbau gewählt ist, dessen wesentlichen Merkmalen in den Fig. 3 und 4 prinzipiell dargestellt sind.

Besonders wichtig ist die Justierung der Halteblöcke für die LWL, von denen nur einer mit seinem Unterteil 26 und den darauf verklebten LWL 27 und 28 in Fig. 3 dargestellt ist, relativ zu den Aufnahmeblöcken 29 und 30 für Linsen 31. Zwischen den Aufnahmeblöcken 29 und 30 sind ein AOM 1 und gegebenenfalls weitere erforderliche optische Bauelemente wie ein Isolator 24 in geeigneter Weise lagerichtig anzuordnen. Auf deren Darstellung wurde in Fig. 3 der besseren Übersichtlichkeit wegen verzichtet.

Die Hauptbestandteile der eine geeignete Justierung ermöglichenden Halterung für die zu justierenden Bauelemente 26, 29 und 30 sind eine Grundplatte 32, welche eine sorgfältig bearbeitete Bezugsanlagefläche 33 aufweist, und darauf angeordnete Führungsschienen 34 und 35 mit seitlichen Anlageflächen 36 und jeweils beidseitigen Stirnanlageflächen 37 bzw. 38, die jeweils im rechten Winkel zu den seitlichen Anlageflächen 36 verlaufen.

Die Bezugsanlagefläche 33 der Grundplatte 32 ist planparallel zu x-z-Ebene, die seitlichen Anlageflächen 36 sind planparallel zur y-z-Ebene und die Stirnanlageflächen 37 und 38 planparallel zur x-y-Ebene.

Die Aufnahmeblöcke 29 und 30 sind auf der Bezugsanlagefläche 33 entlang den seitlichen Anlageflächen 36 in Richtung der Doppelpfeile 39 bzw. 40, also in z-Richtung, verschiebbar. Das Unterteil 26 ist auf der Bezugsanlagefläche 33 entlang der verdeckten Stirnanlageflächen 37 und 38 in Richtung des Doppelpfeils 47, also in x-Richtung, verschiebbar. An die Basisteile 41 bzw. 42 der Aufnahmeblöcke 29 und 30 sind über Biegestellen 43 bzw. 44 Fassungsteile 45 bzw. 46 für die Linsen 31 angelenkt, so daß deren die Linsen 31 tragenden Bereiche in Richtung der Doppelpfeile 48 bzw. 49, also in y-Richtung, heb- und senkbar sind.

Die sich dabei egebende geringfügige Winkelkippung der Linsen 31 konnte toleriert werden.

Man erkennt, daß die erforderlichen Relativverschiebungen der Linsen 31 zu den Stirnflächen der LWL 27 und 28 in jeder der Koordinatenrichtungen x,y und z möglich ist. In jeder einzelnen Koordinatenrichtung kann eine selektive Justierung erfolgen, ohne daß die Justierlage in den anderen Koordinatenrichtungen dadurch beeinträchtigt wird.

Die Festlegung der Basisteile 41 bzw. 42 und der Unterteile 26 kann vorteilhaft durch Verschraubung mit der Grundplatte 32 erfolgen. Die Festlegung der entgültigen Justierposition der Rahmenteile 45 bzw. 46 gegenüber den Basisteilen 41 bzw. 42 wird vorteilhaft durch eine Hemmung einer der Verstellung dienenden, im Gewinde eines der Bauteile drehbaren und gegen das andere Bauteil drückenden Madenschraube bewirkt.

Besondere Sorgfalt ist auch bei der Festlegung der LWL 27 und 28 in ihren Halteblöcken erforderlich. Sie müssen in genauem Parallelabstand zueinander in einer Ebene verlaufen, die zur unteren Fläche des Unterteils 26, die an der Bezugsanlagefläche 33 anliegt, planparallel ist. Deshalb sind V-förmige Einlegenuten 49 und 50 gem. Fig. 4 in das Unterteil 26 in einer solchen Tiefe angebracht, daß die eingelegten LWL 27 und 28 um ein geringes Maß eines erforderlichen optimalen Klebespalts δ (ungefähr 3 μm, stark übertrieben gezeichnet) über die Oberfläche des Unterteils 26 hervorragen. Durch das aufgelegte Oberteil

6

51 werden die LWL 27 und 28 beim Klebevorgang spielfrei in die V-Nuten 49 bzw. 50 gedrückt. Damit die Parallelität von Unterteil 26 und Oberteil 51 eingehalten wird, wodurch beide LWL 27 und 28 in gleicher Weise in ihre Nuten 49 bzw. 50 eingedrückt werden können, sind gleich tiefe Rand-V-Nuten 52 und 53 mit eingesetzten LWL-Stücken 54 und 55 im Unterteil 26 vorgesehen.

Diese Randnuten haben einen sehr viel größeren Abstand als die V-Nuten 49 und 50. Die LWL-Stücke 54 und 55 sind wie die LWL 27 und 28 Abschnitte eines einzigen Längenabschnitts eines Ausgangs-LWL, damit jeweils mit hinreichender Genauigkeit für sämtliche LWL-Elemente der Fig. 4 ein gleicher Außendurchmesser gesichert ist.

Die optisch wirksamen Achsen eines LWL (vgl. Positionen 9 bis 12 in Fig. 1) wird leider nicht durch die Mittelachse der äußeren Mantelfläche eines LWL bestimmt, sondern durch die Mittelachse des optisch aktiven Kerns. Wie in Fig. 4 angedeutet ist, können die Kernflächen 56 bis 57 der LWL 27 bzw. 28 herstellungsbedingt exzentrisch zum Außenkreis der LWL 27 bzw. 28 verschoben sein. Deshalb sind die LWL 27 und 28, ebenso wie gegebenenfalls in einem gegenüberliegenden Halteblock anzuordnende LWL, aus einem einzigen Längenabschnitt eines Ausgangs-LWL durch mehrfache Teilung hergestellt und in für alle Teillängen gleicher Querschnittswinkellage in die zugehörigen V-Nuten 49 und 50 eingelegt. Dadurch wird erreicht, daß die Mittelpunkte der Kernflächen 56 und 57 genau im Abstand der V-Nuten 49 bzw. 50 und in einer Parallelfläche zur Grundfläche des Unterteils 26 angeordnet sind, in welcher natürlich auch die Mittelpunkte der Kerne der von einem gegenüberliegenden Halteblock getragenen LWL liegen müssen. Für den gleichen Zweck wurden weiterhin die Unterteile 26 des in Fig. 3 dargestellten Halteblocks und eines nicht dargestellten gegenüberliegenden Halteblocks in gemeinsamer Aufspannung derart spanabhebend bearbeitet, daß seine zum Spalt hinweisenden Konturen planparallel zur Grundfläche verlaufen. Auch der Schliff und die Polierung der Endflächen der LWL beider Halteblocke wurden gleichzeitig durchgeführt, so daß insbesondere für eine Anordnung nach Fig. 2 gesichert ist, daß die Schrägwinkel $\beta$ für alle LWL gleich sind.

Zur Verhinderung des Hochdrückens des Oberteils 51 durch den Kleber wurden in die Spaltfläche des Unterteils 26 Ausnehmungen 58 und 59 eingebracht, in welche der Kleber ausweichen kann.

Eine genaue Justierung wird dadurch erleichtert, daß die gegenseitigen Anlageflächen an den gegeneinander zu verschiebenen Bauteilen mit hoher Präzision gefertigt werden. Das gilt für Oberflächengüte, Einhaltung der rechten Winkel und Planparallelität der Flächen. Dabei zeigte sich, daß eine zu glatte Polierung der aneinander bei der Justierung gleitenden Flächen zu einem Aneinanderhaften dieser Flächen führt. Ein solches Anhaften wurde dadurch vermieden, daß in die Oberfläche sich kreuzende mikroskopische Bearbeitungsriefen eingearbeitet wurden.

Die in den Figuren dargestellten Ausführungsbeispiele wurden im Hinblick darauf gewählt, daß die wesentlichen Merkmale der Erfindung verdeutlicht werden sollten. Selbstverständlich können aber die in den Patentansprüchen als wesentlich herausgestellten und die anhand der Beschreibung der Ausführungsbeispiele erläuterten Merkmale zu zahlreichen Varianten von Mehrtorelementen kombiniert werden. Insbesondere ist die Erfindung nicht auf eine Anzahl von zwei an einer Seite angeordneten LWL beschränkt. Da der Braggwinkel von der akustischen Frequenz abhängig ist, könnten Eingangsstrahlen durch entsprechend variable Einstellung der akustischen Frequenz auch auf mehr als durch nur zwei LWL vorgegebene Torstellungen gerichtet werden.

Ferner sind die anhand der Fig. 3 erläuterten Justierprinzipien ganz allgemein für alle Fälle vorteilhaft anwendbar, in denen zwei optische Bauelemente, wie z.B. zwei Linsen, in mehreren Koordinatenrichtungen selektiv justiert werden müssen.

Die in Fig. 4 dargestellte Anordnung kann beispielsweise auch dazu verwendet werden, um eine präzise Mehrfachsteckkupplung einer Gruppe von in einer Ebene angeordneten LWL mittels zweier gegeneinander gelegter Halteblöcke nach Fig. 4 zu realisieren.

**Ansprüche**

1.Optisches Mehrtorelement mit einem akustooptischen Modulator (AOM), welcher an einer Seite mindestens zwei Lichtwellenleiter-Anschlüsse, insbesondere Monomode-LWL aufweist, deren Stirnflächen in der Brennebene einer sich zwischen den LWL und dem akustooptischen Modulator befindlichen Linse angeordnet sind,

dadurch gekennzeichnet, daß an mindestens einer Seite des AOM (1) eine einzige Linse (2,3,31) mit ihrer optischen Achse zur Durchgangsachse des AOM (1) ausgerichtet ist, und daß die LWL (4 bis 6, 18 bis 20 bzw. 27,28) achsparallel zueinander und außerhalb der optischen Achse der Linse (2,3,31) in der Weise angeordnet sind, daß von der Linse (2,3,31) zum AOM (1) führende parallel gebündelte Strahlen (14 bis 17) im Braggwinkel zur optischen Achse auf den aktiven Bereich des AOM (1) gelenkt sind.

2. Anordnung nach Anspruch 1,
dadurch gekennzeichnet, daß der Abstand d der nebeneinander befindlichen LWL (6,7 bzw. 9,10 bzw. 19,20 bzw. 27,28) kleiner als das dreifache ihres Außendurchmessers ist.

3. Anordnung nach Anspruch 1 oder 2,
dadurch gekennzeichnet, daß die LWL (6,7 bzw. 9,10 bzw. 19,20 bzw. 27,28) mit ihrer freigelegten Mantelschicht nahezu unmittelbar aneinanderliegen.

4. Anordnung nach einem der Ansprüche 1 bis 3,
dadurch gekennzeichnet, daß der Abstand d der Mittelachsen (9 bis 12) der nebeneinanderliegenden LWL zumindest mit guter Näherung den Wert $d = f \cdot 2\alpha$ hat, wobei f die Brennweite der Linse ist.

5. Anordnung nach einem der Ansprüche 1 bis 4,
dadurch gekennzeichnet, daß die Brennweite f der Linse (2,3,31) den Wert $w_{max} \cdot \pi w_0 / \lambda$ nicht wesentlich überschreitet.

Dabei ist:

$2 w_{max}$ : Durchmesser der aktiven Öffnung des AOM

$w_0$ : Feldweite des vom Monomode-LWL führbaren Strahls.

$\lambda$ : Wellenlänge des vom LWL monomodisch führbaren Lichts.

6. Anordnung nach einem der Ansprüche 1 bis 5,
dadurch gekennzeichnet, daß die Linse (2,3,31) eine Plankonvex- oder Bikonvexlinse ist.

7. Anordnung nach einem der Ansprüche 1 bis 6,
dadurch gekennzeichnet, daß die Linse (2,3,31) und die LWL (6,7, bzw. 9,10 bzw. 19,20 bzw. 27,28) derart relativ zueinander an einem Tragkörper (29,30) befestigt sind, daß bei der Herstellung des Mehrtorelements eine gegenseitige Justage der Abstände in drei zueinander senkrechten Koordinatenrichtungen x, y und z möglich ist.

8. Anordnung nach Anspruch 7,
dadurch gekennzeichnet, daß die Abstände in den Koordinatenrichtungen x, y und z unabhängig voneinander selektiv justierbar und fixierbar sowie Mittel vorgesehen sind, welche bei der Justierung in einer Koordinatenrichtung die Beibehaltung der Justierlage in den anderen Koordinatenrichtungen gewährleisten.

9. Anordnung nach Anspruch 7 oder 8,
dadurch gekennzeichnet, daß die Linse (2,3,31) und die LWL (6,7, bzw. 9,10 bzw. 19,20 bzw. 27,28) in voneinander verschiedenen Koordinatenrichtungen (y, z bzw. x) justierbar sind.

10. Anordnung nach einem der Ansprüche 1 bis 9,
dadurch gekennzeichnet, daß die einer Seite des AOM (1) zugeordneten LWL (6,7, bzw. 9,10 bzw. 19,20 bzw. 27,28) in einem gemeinsamen Halteblock (Teile 26 und 51) in der Weise festgelegt sind, daß sie in der Ebene der akustischen Erregung (13) des AOM (1) angeordnet sind.

11. Anordnung nach Anspruch 10,
dadurch gekennzeichnet, daß der Halteblock (Teile 26 und 51) der LWL (6,7, bzw. 9,10 bzw. 19,20 bzw. 27,28) gegenüber der Grundplatte (32) ausschließlich in der x-Richtung (Richtung der akustischen Welle) justierbar ist, während die Linse (2,3,31) in den Koordinatenrichtungen y und z justierbar ist, und daß die Linse (2,3,31) in einem Aufnahmeblock (29,30) angeordnet ist, dessen Basisteil (41,42) entlang im Winkel zueinander befindlicher und in z-Richtung (Richtung der optischen Achse) verlaufender Längsanlageflächen (36,33) verschiebbar ist, und daß die Linse (2,3,31) in einem gegenüber dem Basisteil (41,42) in y-Richtung verschiebbaren Fassungsteil (45,46) befestigt ist.

12. Anordnung nach einem der Ansprüche 1 bis 11,
dadurch gekennzeichnet, daß an beiden Seiten des AOM (1) befindliche Eingangs- bzw. Ausgangstore bildende LWL (6,7, bzw. 9,10 bzw. 19,20 bzw. 27,28) in einer gemeinsamen Ebene angeordnet sind.

13. Anordnung nach einem der Ansprüche 1 bis 12,
dadurch gekennzeichnet, daß an beiden Seiten des AOM (1) jeweils zwei LWL (6,7 bzw. 9,10 bzw. 19, 20 bzw. 27,28) angeordnet sind.

14. Anordnung nach Anspruch 13,
dadurch gekennzeichnet, daß je zwei an beiden Seiten des AOM (1) befindliche Monomode-LWL (6,7 bzw. 4,5) und jeweils eine zugehörige Linse (3 bzw. 2) beidseitig gleichartig symmetrisch angeordnet sind.

15. Anordnung nach Anspruch 13,
dadurch gekennzeichnet, daß an einer Seite des AOM (1) einer der beiden LWL, welcher zu einem optischen Empfänger führt, ein Multimode-LWL ist.

16. Anordnung nach einem der Ansprüche 1 bis 15,
dadurch gekennzeichnet, daß die an einer Seite des AOM (1) befindlichen LWL (4,5 bzw. 6,7, bzw. 19,20 bzw. 27,28) aus einem einzigen LWL-Längenabschnitt durch Teilung und Nebeneinanderlegen der Teilstükke in gleicher Querschnitts-Winkellage (Fig. 4) hergestellt sind.

17. Anordnung nach Anspruch 14,
dadurch gekennzeichnet, daß die an beiden Seiten des AOM (1) befindlichen LWL (4,5 bzw. 6,7) aus einem einzigen LWL-Abschnitt hergestellt sind, indem durch eine erste Teilung und darauffolgende zweite Teilung der in gleicher Winkellage nebeneinander gelegten ersten Teilstücke zwei Paare gebildet und in identischer Querschnitts-Winkellage (Fig. 4) in jeweils einem Halteblock (Teile 26,51) fixiert sind.

18. Anordnung nach einem der Ansprüche 1 bis 17,
dadurch gekennzeichnet, daß ein Halteblock (Teile 26,51) für die an einer Seite des AOM (1) befindlichen LWL (27,28) und ein Aufnahmeblock (29,30) für die Linse (31) an einer gemeinsamen, zur x-z-Ebene parallelen Ebene (33) verschiebbar anliegen.

19. Anordnung nach Anspruch 18,
dadurch gekennzeichnet, daß Halteblöcke (Teile 26,51) für die LWL (27,28) und die Aufnahmeblöcke (27,28) für die Linsen (31) beidseitig des AOM (1) an einer gemeinsamen zur y-z-Ebene parallelen Ebene (36) verschiebbar anliegen.

20. Anordnung nach einem der Ansprüche 1 bis 19,
dadurch gekennzeichnet, daß ein 3-Torelement durch ein 4-Torelement nach den Ansprüchen 17 oder 19 gebildet ist, bei welchem ein LWL nicht angeschlossen ist.

21. Anordnung nach einem der Ansprüche 1 bis 20,
dadurch gekennzeichnet, daß im Lichtweg zwischen mindestens einem der Tore (LWL 18) und dem AOM (1) ein optischer Isolator (24) angeordnet ist.

22. Anordnung nach Anspruch 21,
dadurch gekennzeichnet, daß der optische Isolator (24) zwischen einer Linse (2) und dem AOM (1) im von einem Laser ausgehenden Strahlweg angeordnet ist.

23. Anordnung nach einem der Ansprüche 1 bis 22,
dadurch gekennzeichnet, daß der Halteblock (Teile 26,51) für die LWL (27,28) aus einem Unterteil (26) mit V-förmigen Aufnahmenuten (49,50) für die LWL (27,28) und einem aufgeklebten Oberteil (51) besteht, welches an den LWL (27,28) unmittelbar anliegt und zum Unterteil (26) einen Klebespalt von insbesondere 2 bis 4 um aufweist.

24. Anordnung nach Anspruch 13,
dadurch gekennzeichnet, daß beidseitig der die Anschlußtore bildenden LWL (27,28) mit Abstand gleichartige LWL (54,55) in gleichartigen V- Nuten (52,53) des Unterteils (26) zur Sicherung einer stabilen Parallel-Anlage des Oberteils (51) vorgesehen sind.

25. Anordnung nach Anspruch 24,
dadurch gekennzeichnet, daß im Bereich zwischen den mittleren und den äußeren V-Nuten (27,28 bzw. 52,53) in den Spaltflächen des Oberteils (51) und/oder des Unterteils (26) Ausnehmungen (58,59) eingearbeitet sind.

26. Anordnung nach einem der Ansprüche 1 bis 25,
dadurch gekennzeichnet, daß die Stirnflächen der LWL in einem Winkel zu ihrer Achse angeschliffen sind, welcher geringfügig, insbesondere um etwa $\beta = 6°$, von einem rechten Winkel abweicht, und daß die Achsen der LWL (18,19,20) in einem solchen Winkel, insbesondere $\gamma = 2,7°$, zur Achse der Linse (2,3) angeordnet sind, daß die Achsen (21,22,23) der aus den Stirnflächen der LWL (18,19,20) austretenden Strahlen parallel zur optischen Achse der Linse (2,3) verlaufen.

27. Anordnung nach Anspruch 26,
dadurch gekennzeichnet, daß die schräg angeschliffenen Stirnflächen der in einem Halteblock (Teile 26, 51) festgelegten LWL (27,28) in einer gemeinsamen Ebene verlaufen.

Fig.1

Fig.2

Fig.3

Fig.4

PHD 87-216